# EUROPEAN PATENT APPLICATION

(11) **EP 4 836 350 A1**
(43) Date of publication of application: **04.11.2026**
(21) Application number: 26173116.0
(22) Date of filing: 17.04.2026
(51) Int. Cl.: H04L 9/08, H04L 9/30, H04L 9/32

(54) **SEED CACHING TO OVERCOME PQC STORAGE BOTTLENECKS**

(30) Priority: 29.04.2025 US 202519192993
(71) Applicant: Microsoft Technology Licensing, LLC, Redmond, WA 98052 (US)
(72) Inventor: BISHEH NIASAR, Mojtaba, Redmond, Washington, 98052 (US); SONI, Vishal, Redmond, Washington, 98052 (US); PILLILLI, Bharat S., Redmond, Washington, 98052 (US)
(74) Representative: CMS Cameron McKenna Nabarro Olswang LLP

(57) **Abstract**

Devices, systems, and methods for memory-efficient post-quantum (PQ) cryptography are provided. A method includes generating, by a hardware security module (HSM), a cryptographic seed, storing, by the HSM, the cryptographic seed, receiving, by the HSM and from a cryptographic processor, a request for the cryptographic seed, and responsive to the request, providing, by the HSM and to the cryptographic processor, the cryptographic seed.

## Description

### BACKGROUND

The advent of quantum computers poses a serious challenge to the security of the existing public-identity key cryptosystems, as they can be potentially broken based on Shor's algorithm. Post-quantum cryptography (PQC) aims to develop cryptographic algorithms that are secure against quantum computer attacks.

### SUMMARY

Post-quantum cryptography (PQC) techniques face implementation challenges including memory capacity for storing cryptographic keys. A method, instead of storing the cryptographic keys, stores a cryptographic seed that can be used to generate the cryptographic keys. This saves memory capacity as the seed can be much smaller than the cryptographic keys.

A method can include generating, by a hardware security module (HSM) or a Root of Trust (RoT), a cryptographic seed. The method can include storing, by the HSM/RoT, the cryptographic seed. The method can include receiving, by the HSM/RoT and from a cryptographic processor, a request for the cryptographic seed. The method can include responsive to the request, providing, by the HSM/RoT and to the cryptographic processor, the cryptographic seed.

The cryptographic seed can be a seed for a post-quantum (PQ) cryptography technique. The cryptography technique can be one of module lattice-based digital signature algorithm (ML-DSA) or module lattice-based key encapsulation mechanism (ML-KEM).

The method can include refraining from persistently storing a private key or encapsulation key in the HSM/RoT. The method can further include storing an associated public key, decapsulation key, or shared key external to the HSM/RoT.

A machine-readable medium can include instructions that, when executed by a cryptographic processor, cause the cryptographic processor to perform operations comprising providing, to a hardware security module (HSM) or Root of Trust (RoT), a request for a cryptographic seed. The operations can further include responsive to the request, receiving the cryptographic seed. The operations can further include generating, using the cryptographic seed and a post-quantum (PQ) cryptography technique, one or more cryptographic keys. The operations can further include performing, using a cryptographic key of the cryptographic keys and the PQ cryptography technique, a cryptographic operation. The operations can further include communicating a result of performing the cryptographic operation to another component.

The PQ cryptography technique can include one of module lattice-based digital signature algorithm (ML-DSA) or module lattice-based key encapsulation mechanism (ML-KEM). The cryptographic operation can include cryptographically signing a message. The cryptographic keys include an encapsulation key and a decapsulation key.

The operations can further include storing the decapsulation key external to the HSM/RoT. The operations can further include generating a shared key and storing the shared key external to the HSM/RoT. The cryptographic keys can include a private key and a public key. The operations can further include storing the public key external to the HSM/RoT and refraining from storing the private key.

A cryptographic processor can include processing circuitry and a memory including instructions stored thereon that, when executed by the processing circuitry, cause the processing circuitry to perform operations comprising providing, to a hardware security module (HSM) or a root of trust (RoT), a request for a cryptographic seed. The operations can further include responsive to the request, receiving the cryptographic seed. The operations can further include generating, using the cryptographic seed and a post-quantum (PQ) cryptography technique, one or more cryptographic keys. The operations can further include performing, using a cryptographic key of the cryptographic keys and the PQ cryptography technique, a cryptographic operation. The operations can further include communicating a result of performing the cryptographic operation to another component.

The PQ cryptography technique can include one of module lattice-based digital signature algorithm (ML-DSA) or module lattice-based key encapsulation mechanism (ML-KEM). The cryptographic operation can include cryptographically signing a message. The cryptographic keys can include an encapsulation key and a decapsulation key. The operations can further include storing the decapsulation key external to the HSM/RoT and refraining from storing the encapsulation key. The operations can further include generating a shared key and storing the shared key external to the HSM/RoT.

The cryptographic keys can include a private key and a public key. The operations can further include storing the public key external to the HSM/RoT and refraining from storing the private key.

While the subject matter is summarized in terms of a method, machine-readable medium, and a processor, the subject matter can be implemented using a system, device, a machine-readable medium, or a combination thereof.

### BRIEF DESCRIPTION OF DRAWINGS

FIG. 1 illustrates, by way of example, a flow diagram of an embodiment of a traditional ECC workflow.
FIG. 2 illustrates, by way of example, a communication diagram of a method of an embodiment of the traditional ECC workflow of FIG. 1.
FIG. 3 illustrates, by way of example, a flow diagram of a method of module lattice-based key encapsulation mechanism (ML-KEM) cryptography operations.
FIG. 4 illustrates, by way of example, a communication diagram of a method of a memory-efficient ML-KEM workflow.
FIG. 5 illustrates, by way of example, a communication diagram of a method of a memory-efficient module lattice-based digital signature algorithm (ML-DSA) workflow.
FIG. 6 illustrates, by way of example, a block diagram of an embodiment of a method for secure and memory-efficient PQ cryptography.
FIG. 7 illustrates, by way of example, a block diagram of an embodiment of a machine (e.g., a computer system) to implement one or more embodiments.

### DETAILED DESCRIPTION

In the following description, reference is made to the accompanying drawings that form a part hereof, and in which is shown by way of illustration specific embodiments which may be practiced. These embodiments are described in sufficient detail to enable those skilled in the art to practice the embodiments. It is to be understood that other embodiments may be utilized and that structural, logical, and/or electrical changes may be made without departing from the scope of the embodiments. The following description of embodiments is, therefore, not to be taken in a limited sense, and the scope of the embodiments is defined by the appended claims.

A critical challenge associated with post-quantum cryptography (PQC) adoption is a substantial increase in cryptographic key sizes as compared to pre-quantum cryptographic algorithms. For example, in lattice-based cryptographic schemes such as module lattice-based digital signature algorithm (ML-DSA) a secret key can be larger than 4 kilobytes. In another example, in module lattice-based key-encapsulation mechanism (ML-KEM) a secret key size can exceed 3 KB. These key sizes are more than 100 times larger than traditional elliptic curve cryptography (ECC) private keys. This increase in key size presents a significant challenge for existing Hardware Security Modules (HSMs) and Root of Trust (RoT) systems on chip (SoCs). HSMs and RoT are designed to efficiently manage much smaller cryptographic keys and may struggle to accommodate the storage and operational demands of PQC.

To address this limitation, a novel seed caching approach is provided. The seed caching approach minimizes storage requirements by retaining only the cryptographic seed. The cryptographic seed can be stored and used later for key generation instead of persistently storing the large private keys. This seed caching approach enables efficient PQC key management within HSMs and RoTs, preserving security while optimizing memory and computational resources.

A table of key sizes for a variety of cryptographic algorithms is provided:

**Table 1: key sizes for a variety of pre-quantum cryptography algorithms (Secp384r1 (ECC) and Rivest-Shamir-Adleman (RSA)-2048) and PQC algorithms (ML-DSA-87 and ML-KEM-1024).**

| Cryptographic Algorithm | Secret Key (Bytes) | Public Key (Bytes) | Signature Size (Bytes) |
|---|---|---|---|
| ML-DSA-87 | 4864 | 2592 | 4595 |
| ML-KEM-1024 | 3168 | 1568 | 1568 |
| Secp384r1 (ECC) | 48 | 96 | 96 |
| RSA-2048 | 256 | 256 | 256 |

HSMs and RoTs, commonly used for securing cryptographic keys, are constrained in their ability to accommodate the significantly larger PQC keys. Expanding storage or redesigning hardware is costly and impractical for many organizations. Therefore, a more efficient key management solution is needed.

Instead of persistently storing a large private key within an HSM or RoT, the seed caching approach retains only the cryptographic seed in secure memory. The cryptographic seed is used in the key generation process. The private key can then be dynamically regenerated from the stored seed whenever needed for cryptographic operations, such as decapsulation or signing. This approach significantly reduces the memory footprint, allowing HSMs or RoTs to support PQC without major hardware modifications. Instead, a firmware update can be performed to make the HSM or RoT manage the additional cryptographic operations required by storing the seed instead of the private key.

The seed caching approach leverages the deterministic nature of PQC key generation. Given the same cryptographic seed and deterministic algorithm, the seed caching approach can reliably reconstruct the private key on demand. Using the seed caching approach, the private is not stored permanently and thus is at less risk of compromise as compared to techniques that store the private key permanently.

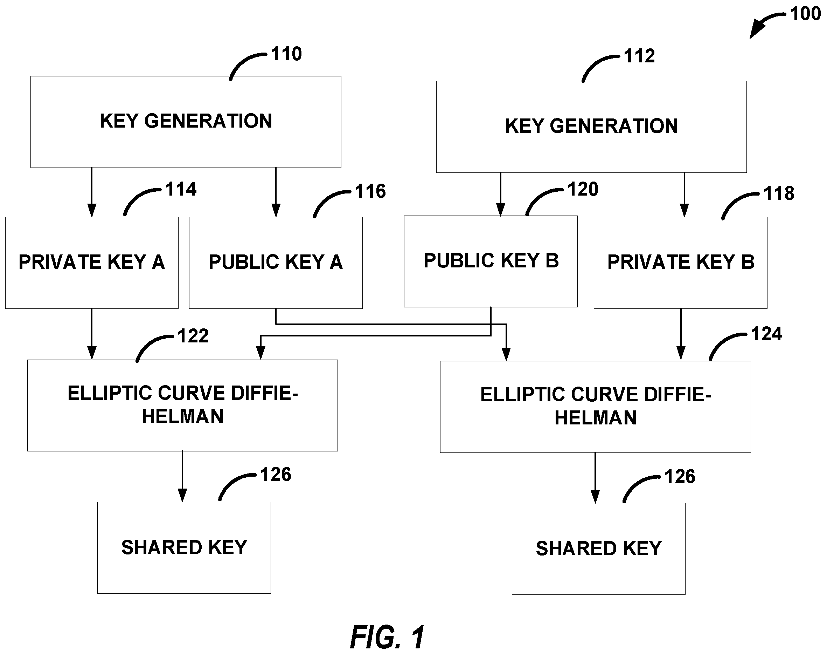

FIG. 1 illustrates, by way of example, a flow diagram of an embodiment of a traditional ECC workflow 100. The ECC workflow 100 includes key generation 110, 112 at separate devices. ECC is a well-known technique and key generation 110, 112 using ECC is well-known. A result of the key generation 110 is a public key 116 and a private key 114 pair for a first device. A result of the key generation 112 is a public key 120 and a private key pair 118 for a second device. For elliptic-curve Diffie-Helman (ECDH) 122 a public key 120 and a private key 114 are used to generate a shared key 126. Another ECDH 124 is performed on the second device to generate the same shared key 126 but based on the public key 116 and the private key 118. In ECC workflows, both the private keys 114, 118 and the shared key 126 are stored in secure memory to facilitate cryptographic operations, such as key exchange, decryption, encryption, and digital signature generation. This approach ensures that the private key 114, 118 remains available for decryption or signing while the shared key 126 is retained for subsequent secure communications.

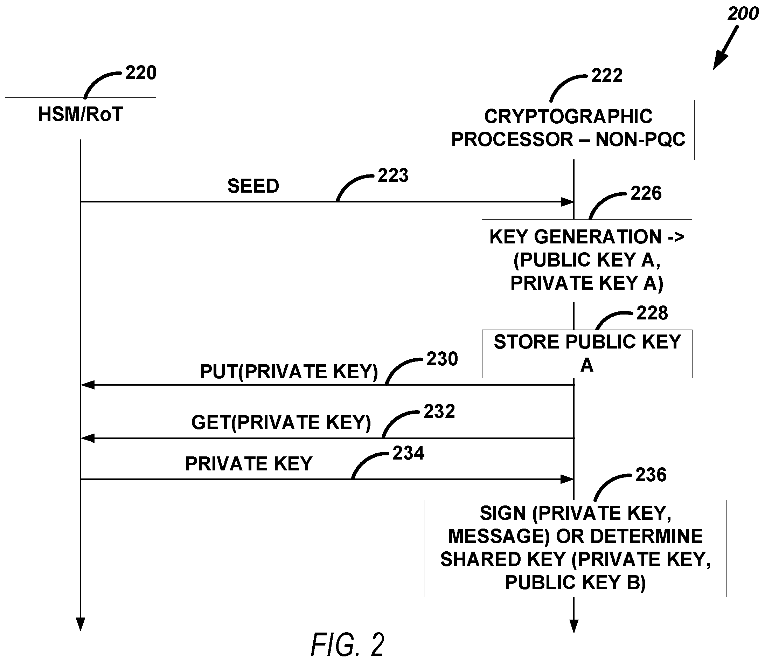

FIG. 2 illustrates, by way of example, a communication diagram 200 of an embodiment of the traditional ECC workflow of FIG. 1. The diagram 200 illustrates communications between an HSM/RoT 220 and a cryptographic processor 222 (pre-quantum cryptography). The HSM is a specialized hardware device that provides secure storage and management of cryptographic keys. The RoT is a trusted, foundational component within a security system, often implemented using an HSM, that ensures the integrity and authenticity of cryptographic operations. An HSM is a physical device designed to securely store and manage cryptographic keys, such as encryption keys and digital signatures. The HSM offers a tamper-resistant environment for performing cryptographic operations, ensuring that sensitive data is protected from unauthorized access. HSMs are often used in applications requiring high security, such as financial transactions, e-commerce, and government systems. The HSM can be a standalone device or integrated into other hardware, like smart cards or embedded system. The RoT is a trusted source within a cryptographic system, serving as the foundation for security. The RoT ensures the integrity and authenticity of cryptographic operations by providing a secure environment for key generation, storage, and usage. HSMs are a common implementation of a RoT, providing a secure hardware environment for storing and managing critical cryptographic keys. RoTs are crucial for building secure systems, especially in environments like the Internet of Things (IoT), where device authenticity and data integrity are paramount. Examples of RoTs include a Trusted Platform Module (TPM) and Secure Element.

The cryptographic processor 222, also known as a crypto chip or cryptographic coprocessor, is a specialized hardware device designed to perform cryptographic operations (e.g., encryption, decryption, signature generation) more efficiently than a general-purpose central processing unit (CPU). Cryptographic processors are designed to handle computationally intensive cryptographic tasks, such as encrypting and decrypting data, generating keys, and performing digital signatures. Cryptographic processors offer faster performance and enhanced security compared to software-based cryptography, which relies on a computer's CPU to perform these operations. Smart cards, TPMs, and HSMs often incorporate cryptographic processors, thus the cryptographic processor 222 can be a component of the HSM/RoT 220. Cryptographic processors often feature tamper-resistant designs, meaning they are designed to detect and respond to any attempts to physically access or tamper with the device.

In traditional cryptography implementations, the HSM/RoT generates a seed 223. The HSM/RoT communicates the seed 223 to the cryptographic processor 222. The cryptographic processor 222 performs a traditional (non-PQC) cryptographic key generation technique at operation 226. The operation 226 can include ECC, for example. A result of the operation 226 is a public key and a private key pair.

The cryptographic processor 228 can store the private key in the HSM/RoT 220 through a store command 230. The cryptographic processor 228 can then, sometime in the future, access the stored private key by issuing a read command 232. The private key can be provided, by the HSM/RoT 220 to the cryptographic processor 222 through a communication 234. The cryptographic processor 222 can then use the private key to sign a message or determine a shared key at operation 236.

Applying this traditional key management approach shown in FIG. 2 to ML-KEM, ML-DSA, or another PQC technique results in the need to store both a decapsulation key (analogous to the private key 114, 118 in ECC) and a shared secret. However, unlike ECC, where the private key is relatively small (e.g., 48 bytes for Secp384r1), the decapsulation key in ML-KEM can exceed 3 KB, making it orders of magnitude larger than the private key for ECC.

This substantial increase in key size presents a critical challenge for legacy HSMs and RoTs, which were designed to handle much smaller cryptographic keys efficiently. Many existing HSMs lack the necessary storage capacity to accommodate PQCs large decapsulation keys or other cryptographic keys, making direct adoption of PQC schemes impractical without some sort of change. This limitation necessitates innovative approaches to optimize key storage and enable efficient PQC adoption within constrained cryptographic environments.

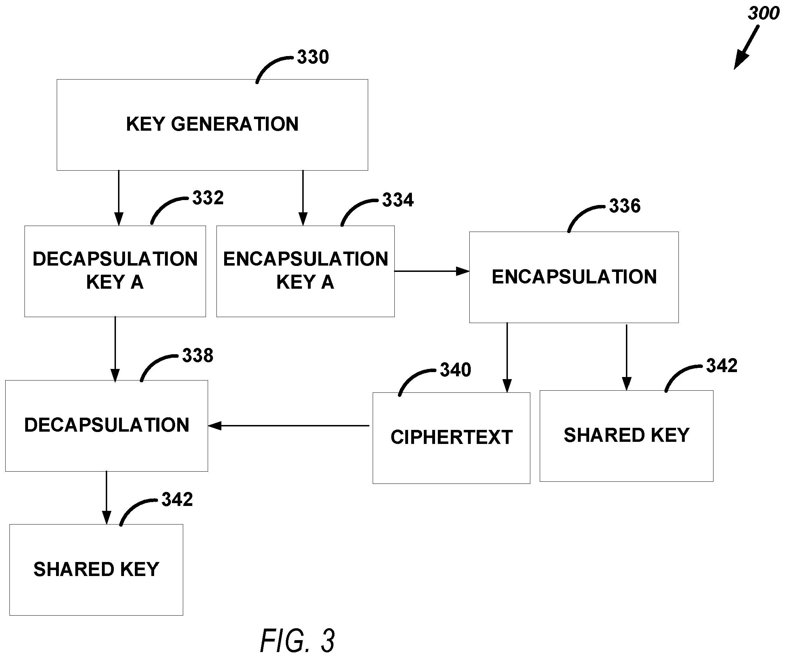

FIG. 3 illustrates, by way of example, a flow diagram of a method 300 of module lattice-based key encapsulation mechanism (ML-KEM) cryptography operations. The ML-KEM cryptography method 300 includes key generation 330. In the key generation 330, a seed value is generated and used to generate a decapsulation key 332 (analogous to a public key) and an encapsulation key 334 (analogous to a private key). Cryptographic encapsulation is performed based on the encapsulation key 334 and by an encapsulation operation 336. Cryptographic decapsulation is performed based on the decapsulation key 332 and ciphertext 340 and by a decapsulation operation 338. A result of the encapsulation operation 336 is ciphertext 340 (encrypted text) and a shared key 342. A result of the decapsulation operation 338 is the same shared key 342.

Instead of storing the decapsulation key 332, the encapsulation key 334, and the shared key 342 in the HSM or RoT, the seed used in the key generation 330 can be stored in the HSM or RoT. Then, when a cryptographic operation is to be performed, the keys 332, 334 are derived from the seed using the deterministic key generation algorithm and used by a cryptographic processor for cryptographic operations. The corresponding shared key 342 can be computed and stored externally.

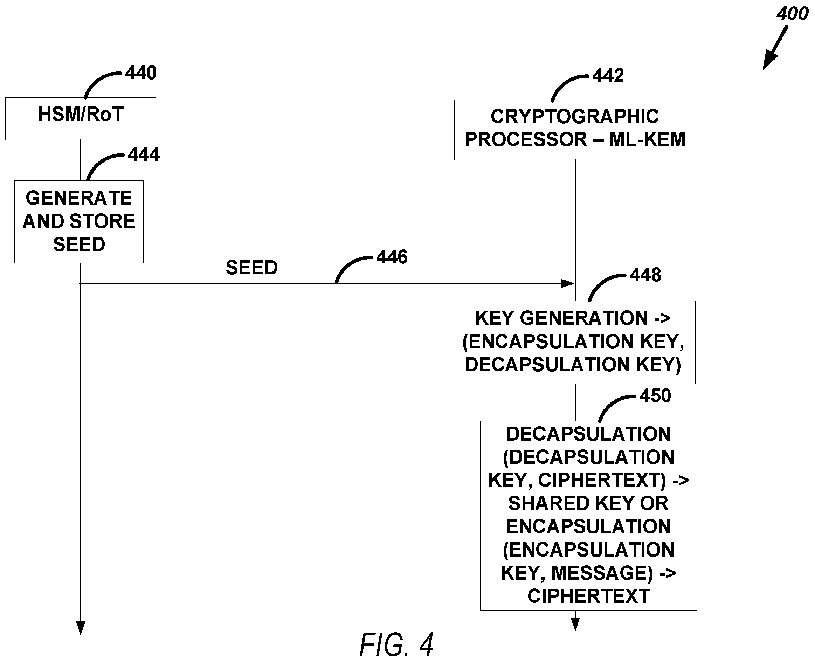

FIG. 4 illustrates, by way of example, a communication diagram of a method 400 of a memory-efficient ML-KEM workflow. The HSM/RoT 440 is similar to the HSM/RoT 220, with the HSM/RoT 440 configured to store cryptographic seeds instead of storing private keys. The cryptographic processor 442 is similar to the cryptographic processor 222, with the cryptographic processor 442 configured to repeatedly generate encapsulation keys based on seeds instead of retrieving the encapsulation key from the HSM/RoT 440.

The HSM/RoT 440 generates and stores a cryptographic seed at operation 444. The seed is provided to the cryptographic processor 442 in communication 446. The cryptographic processor 442 then performs key generation at operation 448. In ML-KEM the operation 448 includes generating an encapsulation key and a decapsulation key. The cryptographic processor 442 then uses the decapsulation key and/or encapsulation key to perform one or more cryptographic operations 450. The operations 450 can include encapsulation (analogous to encryption), decapsulation (analogous to decryption), generating a shared key, signing a message, or the like.

Using the scheme underlying the communication diagram of FIG. 4, the HSM/RoT 440 does not store the encapsulation key. Instead, the HSM/RoT 440 stores a cryptographic seed. The cryptographic seed is then (repeatedly) retrieved and used to generate the encapsulation key. The encapsulation key is then used for cryptographic operations without storing the encapsulation key. This scheme keeps the encapsulation key off the device that includes the HSM/RoT and cryptographic processor. Keeping the encapsulation key off the device helps keep the encapsulation key secure since it cannot be read from the HSM/RoT.

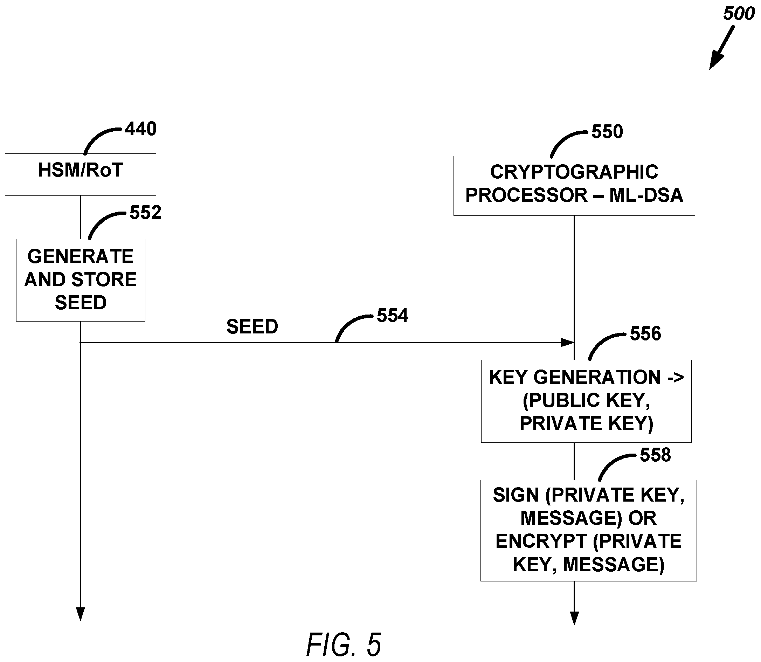

FIG. 5 illustrates, by way of example, a communication diagram of a method 500 of a memory-efficient module lattice-based digital signature algorithm (ML-DSA) workflow. The HSM/RoT 440 is similar to of the same as the HSM/RoT 440 of FIG. 4. The cryptographic processor 550 is similar to the cryptographic processor 442, with the cryptographic processor 550 configured to implement ML-DSA cryptography operations instead of ML-KEM operations.

The HSM/RoT 440 generates and stores a cryptographic seed at operation 552. The seed is provided to the cryptographic processor 550 in communication 554. The cryptographic processor 550 then performs key generation at operation 556. In ML-DSA the operation 556 includes generating a private key and a public key. The cryptographic processor 550 then uses the decapsulation key and/or encapsulation key to perform one or more cryptographic operations 558. The operations 558 can include encryption, signing, or the like. The public key can be stored externally for sharing in some instances (without the need to retrieve the seed and re-generate the public key).

Using the scheme underlying the communication diagram of FIG. 5, the HSM/RoT 440 does not store cryptographic keys. Instead, the HSM/RoT 440 stores a cryptographic seed. The cryptographic seed is then (repeatedly) retrieved and used to generate the cryptographic key(s). The cryptographic key(s) are then used for cryptographic operations without storing the private key. This scheme keeps the private key off the device that includes the HSM/RoT and cryptographic processor. Keeping the private key off the device helps keep the private key secure since it cannot be read from the HSM/RoT.

When signing, or other cryptographic operation is required, the seed is retrieved. The private key is regenerated from the seed by re-preforming the key generation operation. The regenerated private key is used for signing the message. Then, the signature is produced and output. Hence, the regenerated private key is not persistently stored, thus minimizing long-term exposure. This process ensures that only the seed remains in secure storage, while the actual private key exists only temporarily during cryptographic operations.

The security of the private key remains intact, as it is computationally infeasible to derive the private key without access to the stored seed. Traditional storage of persistent private keys increases the risk of extraction through memory attacks or long-term compromises. By only storing the seed, the attack surface is minimized, requiring adversaries to obtain the seed rather than the full private key. The seed, being significantly smaller than the full private key, is easier to protect within an HSM. Existing security techniques such as hardware-backed encryption and secure key derivation functions can further enhance its protection.

Regenerating the private key introduces additional computational steps. However, lattice-based PQ cryptography schemes typically have faster key generation and signing times than ECC signing operations, mitigating performance concerns. Reducing the storage footprint enables HSMs to manage a larger number of cryptographic entities without hardware expansion. Not persistently storing the keys avoids costly hardware redesigns and extends the operational lifespan of existing cryptographic infrastructure.

Seed caching can be integrated into existing HSM firmware without requiring hardware modifications. The cryptographic library can be updated to support deterministic private key regeneration from cached seeds. Cloud-based key management systems can implement seed caching to optimize PQC key handling. Additionally, hybrid security models can support both classical and PQC key storage, ensuring backward compatibility. Not persistently storing the private key reduces key storage requirements in embedded systems, facilitating PQ firmware authentication. Not persistently storing the private key reduces key storage optimizes field-programmable gate array (FPGA) or application specific integrated circuit (ASIC)-based cryptographic modules by reducing persistent storage needs.

The seed caching method presents a scalable, efficient, and secure approach for managing PQ cryptography keys within HSMs. By storing only the cryptographic seed instead of the full private key, this technique addresses the challenge of excessive key size in PQ cryptography while ensuring seamless integration with existing cryptographic infrastructures. As quantum-resistant cryptography becomes the new standard, efficient key management techniques like seed caching help ensure a smooth transition without compromising security or performance.

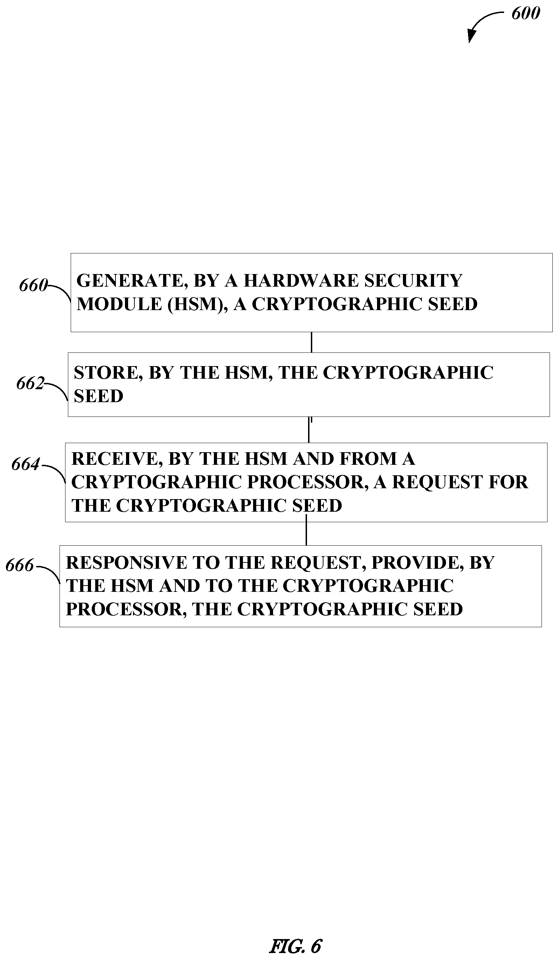

FIG. 6 illustrates, by way of example, a block diagram of an embodiment of a method 600 for secure and memory-efficient PQ cryptography. The method 600 as illustrated includes generating, by a hardware security module (HSM), a cryptographic seed, at operation 660; storing, by the HSM, the cryptographic seed, at operation 662; receiving, by the HSM and from a cryptographic processor, a request for the cryptographic seed, at operation 664; and responsive to the request, providing, by the HSM and to the cryptographic processor, the cryptographic seed, at operation 666. The cryptographic seed is a seed for a post-quantum (PQ) cryptography technique. The cryptography technique can include one of module lattice-based digital signature algorithm (ML-DSA) or module lattice-based key encapsulation mechanism (ML-KEM). The method 600 can further include refraining from persistently storing a private key or encapsulation key in the HSM. The method 600 can further include storing an associated public key, decapsulation key, or shared key external to the HSM.

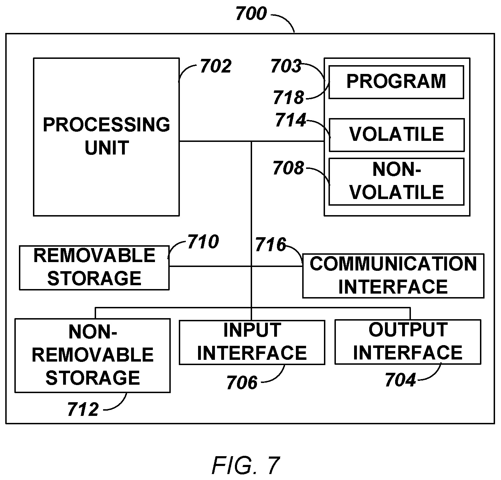

FIG. 7 illustrates, by way of example, a block diagram of an embodiment of a machine 700 (e.g., a computer system) to implement one or more embodiments. Any of the HSM/RoT 440, cryptographic processor 442, 550, method 600 or a component or operation thereof can include one or more of the components of the machine 700. One or more of the HSM/RoT 440, cryptographic processor 442, 550, method 600 or a component or operation thereof can include one or more of the components of the machine 700, or a component or operations thereof can be implemented, at least in part, using a component of the machine 700. One example machine 700 (in the form of a computer), may include a processing unit 702, memory 703, removable storage 710, and non-removable storage 712. Although the example computing device is illustrated and described as machine 700, the computing device may be in different forms in different embodiments. For example, the computing device may instead be a smartphone, a tablet, smartwatch, or other computing device including the same or similar elements as illustrated and described regarding FIG. 7. Devices such as smartphones, tablets, and smartwatches are generally collectively referred to as mobile devices. Further, although the various data storage elements are illustrated as part of the machine 700, the storage may also or alternatively include cloud-based storage accessible via a network, such as the Internet.

Memory 703 may include volatile memory 714 and non-volatile memory 708. The machine 700 may include - or have access to a computing environment that includes - a variety of computer-readable media, such as volatile memory 714 and non-volatile memory 708, removable storage 710 and non-removable storage 712. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices capable of storing computer-readable instructions for execution to perform functions described herein.

The machine 700 may include or have access to a computing environment that includes input 706, output 704, and communication circuitry 716. Output 704 may include a display device, such as a touchscreen, that also may serve as an input device. The input 706 may include one or more of a touchscreen, touchpad, mouse, identity keyboard, camera, one or more device-specific buttons, one or more sensors integrated within or coupled via wired or wireless data connections to the machine 700, and other input devices. The computer may operate in a networked environment using a communication connection to connect to one or more remote computers, such as database servers, including cloud-based servers and storage. The remote computer may include a personal computer (PC), server, router, network PC, a peer device or other common network node, or the like. The communication connection may include a Local Area Network (LAN), a Wide Area Network (WAN), cellular, Institute of Electrical and Electronics Engineers (IEEE) 802.11 (Wi-Fi), Bluetooth, or other networks.

Computer-readable instructions stored on a computer-readable storage device are executable by the processing unit 702 (sometimes called processing circuitry) of the machine 700. A hard drive, CD-ROM, and RAM are some examples of articles including a non-transitory computer-readable medium such as a storage device. For example, a computer program 718 may be used to cause processing unit 702 to perform one or more methods or algorithms described herein.

The communication circuitry 716 can include a radio, such as a transceiver, configured to communicate wirelessly with other devices. The communication circuitry 716 can include one or more antennas, modulators, demodulators, amplifiers, digital to analog converters, analog to digital converters, phase locked loops, a combination thereof, or the like. The communication circuitry 716 is configured to format and transmit communications to other devices.

The operations, functions, or algorithms described herein may be implemented in software in some embodiments. The software may include computer executable instructions stored on computer or other machine-readable media or storage device, such as one or more non-transitory memories (e.g., a non-transitory machine-readable medium) or other type of hardware based storage devices, either local or networked. Further, such functions may correspond to subsystems, which may be software, hardware, firmware, or a combination thereof. Multiple functions may be performed in one or more subsystems as desired, and the embodiments described are merely examples. The software may be executed on a digital signal processor, ASIC, microprocessor, central processing unit (CPU), graphics processing unit (GPU), field programmable gate array (FPGA), or other type of processor operating on a computer system, such as a personal computer, server or other computer system, turning such computer system into a specifically programmed machine. The functions or algorithms may be implemented using processing circuitry, such as may include electric and/or electronic components (e.g., one or more transistors, resistors, capacitors, inductors, amplifiers, modulators, demodulators, antennas, radios, regulators, diodes, oscillators, multiplexers, logic gates, buffers, caches, memories, GPUs, CPUs, field programmable gate arrays (FPGAs), or the like).

Additional Notes and Examples, wherein devices, systems, and methods for memory-efficient post-quantum (PQ) cryptography are provided.

Example 1 includes a method comprising generating, by a hardware security module (HSM), a cryptographic seed, storing, by the HSM, the cryptographic seed, receiving, by the HSM and from a cryptographic processor, a request for the cryptographic seed, and responsive to the request, providing, by the HSM and to the cryptographic processor, the cryptographic seed.

In Example 2, Example 1 further includes, wherein the cryptographic seed is a seed for a post-quantum (PQ) cryptography technique.

In Example 3, Example 2 further includes, wherein the cryptography technique is one of module lattice-based digital signature algorithm (ML-DSA) or module lattice-based key encapsulation mechanism (ML-KEM).

In Example 4, at least one of Examples 1-3 further includes refraining from persistently storing a private key or encapsulation key in the HSM.

In Example 5, Example 4 further includes storing an associated public key, decapsulation key, or shared key external to the HSM.

Example 6 includes a non-transitory machine-readable medium including instructions that, when executed by a cryptographic processor, cause the cryptographic processor to perform operations comprising providing, to a hardware security module (HSM), a request for a cryptographic seed, responsive to the request, receiving the cryptographic seed, generating, using the cryptographic seed and a post-quantum (PQ) cryptography technique, one or more cryptographic keys, performing, using a cryptographic key of the cryptographic keys and the PQ cryptography technique, a cryptographic operation, and communicating a result of performing the cryptographic operation to another component.

In Example 7, Example 6 further includes, wherein the PQ cryptography technique includes one of module lattice-based digital signature algorithm (ML-DSA) or module lattice-based key encapsulation mechanism (ML-KEM).

In Example 8, at least one of Examples 6-7 further includes, wherein the cryptographic operation includes cryptographically signing a message.

In Example 9, at least one of Examples 6-8 further includes, wherein the cryptographic keys include an encapsulation key and a decapsulation key.

In Example 10, Example 9 further includes, wherein the operations further comprise storing the decapsulation key external to the HSM.

In Example 11, Example 10 further includes, wherein the operations further comprise generating a shared key and storing the shared key external to the HSM.

In Example 12, at least one of Examples 6-11 further includes, wherein the cryptographic keys include a private key and a public key.

In Example 13, Example 12 further includes, wherein the operations further comprise storing the public key external to the HSM and refraining from storing the private key.

Example 14 includes a cryptographic processor comprising processing circuitry, and a memory including instructions stored thereon that, when executed by the processing circuitry, cause the processing circuitry to perform operations comprising providing, to a root of trust (RoT), a request for a cryptographic seed, responsive to the request, receiving the cryptographic seed, generating, using the cryptographic seed and a post-quantum (PQ) cryptography technique, one or more cryptographic keys, performing, using a cryptographic key of the cryptographic keys and the PQ cryptography technique, a cryptographic operation, and communicating a result of performing the cryptographic operation to another component.

In Example 15, Example 14 further includes, wherein the PQ cryptography technique includes one of module lattice-based digital signature algorithm (ML-DSA) or module lattice-based key encapsulation mechanism (ML-KEM).

In Example 16, at least one of Examples 14-15 further includes, wherein the cryptographic operation includes cryptographically signing a message.

In Example 17, at least one of Examples 14-16 further includes, wherein the cryptographic keys include an encapsulation key and a decapsulation key.

In Example 18, Example 17 further includes, wherein the operations further comprise storing the decapsulation key external to the RoT and refraining from storing the encapsulation key.

In Example 19, Example 18 further includes, wherein the operations further comprise generating a shared key and storing the shared key external to the RoT.

In Example 20, at least one of Examples 14-19 further includes, wherein the cryptographic keys include a private key and a public key, and the operations further comprise storing the public key external to the RoT and refraining from storing the private key.

Although a few embodiments have been described in detail above, other modifications are possible. For example, the logic flows depicted in the figures do not require the order shown, or sequential order, to achieve desirable results. Other steps may be provided, or steps may be eliminated, from the described flows, and other components may be added to, or removed from, the described systems. Other embodiments may be within the scope of the following claims.

## Claims

1. A method (600) comprising:
generating, by a hardware security module, HSM, a cryptographic seed (660);
storing, by the HSM, the cryptographic seed (662);
receiving, by the HSM and from a cryptographic processor, a request for the cryptographic seed (664); and
responsive to the request, providing, by the HSM and to the cryptographic processor, the cryptographic seed (666).

2. The method of claim 1, wherein the cryptographic seed is a seed for a post-quantum, PQ, cryptography technique.

3. The method of claim 2, wherein the cryptography technique is one of module lattice-based digital signature algorithm, ML-DSA, or module lattice-based key encapsulation mechanism, ML-KEM.

4. The method of any preceding claim, refraining from persistently storing a private key or encapsulation key in the HSM.

5. The method of claim 4, further comprising storing an associated public key, decapsulation key, or shared key external to the HSM.

6. A non-transitory machine-readable medium (703) including instructions that, when executed by a cryptographic processor, cause the cryptographic processor (442, 550) to perform operations comprising:
providing, to a hardware security module, HSM, a request for a cryptographic seed (664);
responsive to the request, receiving the cryptographic seed (446, 554, 666);
generating, using the cryptographic seed and a post-quantum, PQ, cryptography technique, one or more cryptographic keys (448, 556);
performing, using a cryptographic key of the cryptographic keys and the PQ cryptography technique, a cryptographic operation (450, 558); and
communicating a result of performing the cryptographic operation to another component (704).

7. The non-transitory machine-readable medium of claim 6, wherein the PQ cryptography technique includes one of module lattice-based digital signature algorithm, ML-DSA, or module lattice-based key encapsulation mechanism, ML-KEM.

8. The non-transitory machine-readable medium of claim 6 or 7, wherein the cryptographic operation includes cryptographically signing a message.

9. The non-transitory machine-readable medium of any of claims 6 to 8, wherein the cryptographic keys include an encapsulation key and a decapsulation key.

10. The non-transitory machine-readable medium of claim 9, wherein the operations further comprise storing the decapsulation key external to the HSM.

11. The non-transitory machine-readable medium of claim 10, wherein the operations further comprise generating a shared key and storing the shared key external to the HSM.

12. The non-transitory machine-readable medium of any of claims 6 to 11, wherein the cryptographic keys include a private key and a public key.

13. The non-transitory machine-readable medium of claim 12, wherein the operations further comprise storing the public key external to the HSM and refraining from storing the private key.

14. A cryptographic processor (442, 550) comprising:
processing circuitry (702);
a memory (703) including instructions stored thereon that, when executed by the processing circuitry, cause the processing circuitry (703) to perform operations comprising:
providing, to a root of trust, RoT, a request for a cryptographic seed (664);
responsive to the request, receiving the cryptographic seed (446, 554, 666);
generating, using the cryptographic seed and a post-quantum, PQ, cryptography technique, one or more cryptographic keys (448, 556);
performing, using a cryptographic key of the cryptographic keys and the PQ cryptography technique, a cryptographic operation (450, 558); and
communicating a result of performing the cryptographic operation to another component (704).

15. The cryptographic processor of claim 14, wherein the PQ cryptography technique includes one of module lattice-based digital signature algorithm, ML-DSA, or module lattice-based key encapsulation mechanism, ML-KEM.
